# EUROPEAN PATENT APPLICATION

(11) **EP 1 215 273 A2**
(43) Date of publication of application: **19.06.2002**
(21) Application number: 01310412.0
(22) Date of filing: 13.12.2001
(51) Int. Cl.: C10L 5/44, C10B 53/02, C10B 53/08

(54) **Artificial charcoal and methods for making thereof**

(30) Priority: 14.12.2000 JP 2000380597
(71) Applicant: Motai, Takeji, Chofu-shi, Tokyo (JP); Fujii, Tohiaki, Sagamihara-shi (JP)
(72) Inventor: Motai, Takeji, Chofu-shi, Tokyo (JP); Fujii, Tohiaki, Sagamihara-shi (JP)
(74) Representative: Stanley, David William

(57) **Abstract**

Artificial charcoal is manufactured by utilizing organic industrial waste materials and materials that are prone to cause environmental pollution if processed by ordinary processing methods. Fine stone powder that generates far-infrared radiation and/or negative ions is mixed with a powder of pulverized, combustible, industrial waste material. The fine stone powder may comprise one or more of quartz porphyry, granite porphyry and tourmaline. The mixed powders are subjected to a dry distillation process to produce carbonised material that is then moulded and solidified to produce an artificial charcoal having great advantages, both socially and economically. The far-infrared radiation and/or negative ions are considered to be extremely useful for human health.

## Description

This invention relates to artificial charcoal.

Typically, artificial charcoal is produced as a briquette, by pulverizing, moulding and solidifying coal.

In modern society, large amounts of industrial wastes are generated day after day. For instance, at domestic and/or industrial construction sites, waste materials such as the remainders of construction materials or wood chips are generated. At sites such as lumber exporting ports, sluice gates at electric power stations, and places for logging, there occur stacks of wood chips, bark materials, small wood pieces or irregular-sized small logs. At the sites of foodstuff manufacturing industries, much waste such as beer lees, distilled liquor lees, bean curd lees, coffee grounds or the dregs from oil extraction occurs day by day. Also, enormous amounts of garbage from general households are brought into garbage incineration facilities.

Such waste materials arc generally treated as industrial wastes, and are often burned at garbage incineration facilities. However, large amounts of carbon dioxide are generated by such incineration and, in some cases, there may occur environmental contamination hazards that may belch noxious dioxin or the like into the air.

Preferred embodiments of the present invention aim to provide a method for re-utilizing as artificial charcoals combustible industrial waste materials, from which any plastics etc., which can generate harmful gases upon combustion, have been eliminated in advance, and artificial charcoal which can purify combustion environments due to the radiation of far-infrared rays and/or negative ions, which are extremely useful for human health.

According to one aspect of the present invention, there is provided a method of producing an artificial charcoal, the method comprising the steps of:
mixing a powder of pulverized, combustible, waste material with a powder of at least one pulverized stone that generates far-infrared radiation and/or negative ions;
moulding and solidifying the mixed powders; and
subjecting the moulded material to a dry distillation process, thereby to produce the artificial charcoal.

As will be known to those skilled in the art, a dry distillation process is one in which air and heat is supplied into a furnace at a rate that can burn a material (often a waste material) without flames being used. The process typically releases flammable gas that would otherwise combust.

The method may include a preliminary step of pulverizing small pieces of said waste material to obtain said powder thereof.

According to another aspect of the present invention, there is provided an artificial charcoal comprising a mixture of a powder of pulverized, combustible, waste material and a powder of at least one pulverized stone that generates far-infrared radiation and/or negative ions, which mixture has been subjected to a dry distillation process.

Said pulverised stone may be more finely pulverised than said waste material.

According to another aspect of the present invention, there is provided a method of producing an artificial charcoal, the method comprising the steps of:
subjecting combustible waste material to a dry distillation process, thereby to produce a carbonised material;
mixing said carbonised material with at least one pulverized stone that generates far-infrared radiation and/or negative ions; and
solidifying the mixed material by a moulding process.

In the above various aspects of the invention, said at least one stone preferably comprises one of or a mixture of two or all of quartz porphyry, granite porphyry and tourmaline.

According to another aspect of the present invention, there is provided a method of producing an artificial charcoal, said method including the steps of:
burning an organic material in a dry distillation heating furnace to generate combustible gas and to leave a residue comprising at least 90% carbonised material, by controlling and adjusting a dry distillation carbonisation temperature in the furnace; and
introducing said combustible gas into a gas combustion chamber, for use as a fuel.

Such a method may include the step of utilising said gas as a fuel for biomass electric power generation and/or heating and/or greenhouses - including greenhouses of plastics materials.

In the above various aspects of the invention, said waste material or said organic material preferably comprises industrial waste organic material and/or material prone to cause environmental pollution when burnt.

In the above various aspects of the invention, said waste material or said organic material may comprise wood and/or foodstuff waste and/or plant fibre.

In the above various aspects of the invention, an adhesive may be included to bind the constituents of the artificial charcoal together.

Preferred embodiments of the present invention may be extremely useful in efficiently processing considerable amounts of industrial waste materials and materials leading to environmental pollution that are discharged in the daily life of world society, and moreover, an artificial charcoal in accordance with preferred embodiments generates few carbon dioxide gases, whilst being capable of radiating far-infrared rays and/or negative ions that are useful to human health.

In preferred embodiments of the present invention, required raw materials comprise (1) a primary raw material produced by finely pulverized, combustible, industrial waste materials and materials leading to environmental pollution, (2) a sub-raw material consisting of at least one powder or mixture of powders of finely pulverized stone such as quartz porphyry, granite porphyry, and tourmaline which generate far-infrared radiation and/or negative ions, and (3) an adhesive to be added to the powders if necessary.

A further discussion of preferred embodiments of the present invention now follows.

There are many combustible, industrial waste and environmental pollution-prone materials that may be used as prime raw materials in preferred embodiments of the present invention, but it may be preferable to use combustible materials among industrial waste materials discharged from factories, construction sites, offices, and homes, or other combustible materials such as wood bark, small pieces of timber, and waste lumber subject to stack at sluice gates of electric power stations.

Other examples of raw materials include waste organic materials such as wood waste generated in cutting lumber, sawed wood waste, chaff, and recycled article waste of paper, and various kinds of plant fibres; and hydrous waste organic materials such as beer lees, distilled liquor lees, bean curd lees, coffee grounds and dregs from oil extraction.

Plastics or other materials that generate harmful gases upon combustion should be eliminated in advance.

Particularly advantageous features of preferred embodiments of the present invention arise from the use of finely pulverized powders of stones such as quartz porphyry, granite porphyry, and tourmaline, which generate far-infrared radiation and/or negative ions, as well as an adhesive, such as bcntonite, which may be added if necessary.

The common features amongst materials such as quartz porphyry, granite porphyry and tourmaline are that all of these materials generate far-infrared radiation and/or negative ions, and are beneficial to human health.

Alternative materials that generate far-infrared radiation and/or negative ions heating - and increase combustion time - can be found, of course, other than the three kinds of materials illustrated above. These materials are merely described as typical ones because they are available at low cost in the commercial market.

Furthermore, preferred embodiments of the present invention may have another feature different from the conventional art. It is known that large volumes of organic materials arc burnt to generate combustible gases that can be used as the fuels for biomass power generation, and this is already put to practical use in many countries all over the world. However, after having finished generating the gases, almost all of the organic materials remain as ashes. Accordingly, such ashes can be used only in such a manner as, for example, to mix with soil in land reclamation.

On the contrary, in preferred embodiments of the present invention, combustible gases which are generated from a carbonising and heating furnace when a carbonised material is produced by the combustion of organic materials, can be used as fuels for biomass power generation, while over 90% of the reside of the burnt organic materials are transformed into carbonised material by controlling and adjusting the carbonising temperature in the carbonising and heating furnace, thus making an artificial charcoal with high heat value out of the resulting carbonised material, and then, the carbonised material may be re-used as a fuel for biomass power generation in place of conventional coal.

Artificial charcoal according to preferred embodiments of the present invention is an ideal fuel that can provide clean environmental surroundings, because it generates negative ions, but generates little carbon dioxide as compared with conventional coal which emits large volumes of carbon dioxide, and moreover, the ashes left after the combustion of the artificial charcoal can still generate negative ions and be widely utilized as an effective fertilizer for plants, fruit, trees, and the like.

The quartz porphyry and granite porphyry mentioned above are super porous minerals (surface area per gram can reach several hundred square meters). The porous mineral (according to X-ray analysis, it is confirmed that it contains more than 25,000 kinds of components per gram) adsorbs harmful materials such as smoke, contaminated air, or odour into its pores, and decomposes harmful materials due to a catalytic function acting between large numbers of molecules.

In the light of these features, it is also proposed that such materials be adopted as construction materials for cleaning indoor surroundings in the form of boards for interior design materials, wallpaper, or paint.

Further, the far-infrared radiation generated by quartz porphyry and granite porphyry is well known as an electromagnetic wave that changes water quality, and moreover, it can sense a very small amount of mineral density contained in the components of the stone material, and has another function for adjusting adsorption of excessive minerals as well as elution of insufficient mineral with a good balance therebetween.

The quartz porphyry quarried at Shitara-cho, Kita Shitara-County, Aichi-Prefecture, Japan is a typical kind of stone to be used.

The granite porphyry quarried at Tono-shi, Iwate-Prefecture or at Shirakawa-cho, Kamo-County, Gife-Prefecture, Japan is the most preferable one, which is easily available in the commercial market under the trademark of Bakuhanseki. It has already been confirmed that, through the analysis of Bakuhanseki carried out by many University Laboratories, it has a significant scientific function in absorbing harmful materials.

Tourmaline is a polar crystal of cyclic silicate mineral having a complicated chemical structure. It is also called in Japan "electrical stone", and exhibits piezoelectric characteristics as well as the same effects of far-infrared radiation and/or negative ion generation as quartz porphyry and granite porphyry.

As to the effect of far-infrared radiation, electronic or electric energies generated by quartz porphyry, granite porphyry and tourmaline have an effect on activating human being by warming the cells from the depths of the human body, thereby alleviating fatigue, improving the workings of the stomach, and alleviating neuralgia and/or muscular pain.

As to the effect of negative ions, quartz porphyry, granite porphyry and tourmaline are rich in negative ions, so that they may have many effects such as adjustment of the autonomic nerve system, enhancement of natural healing, purification (alkalisation) of blood, and promotion of immuno-efficiency.

As mentioned above, preferred embodiments of the present invention provide artificial charcoal in such a manner that a powder is made in advance by finely pulverizing combustible industrial wastes or environmental pollution-prone materials prior to carbonising and heating, into which a powder of quartz porphyry, granite porphyry, and tourmaline, or a mixed powder combining materials optionally selected from these powdered stones, is added - together with, if necessary, an adhesive such as bentonite or cornstarch - and thereafter moulding and solidifying the mixed materials. Alternatively, artificial charcoal is produced in such a manner that a carbonised material is made in advance by carbonising and heating combustible industrial wastes or environmental pollution-prone materials, into which a powder of quartz porphyry, granite porphyry, and tourmaline, or a mixed powder combining materials optionally selected from these powdered stones, is added - together with, if necessary, an adhesive such as bentonite or cornstarch - and thereafter moulding and solidifying the mixed carbonised material.

As an adhesive, bentonitc or cornstarch that is readily available in large quantities in the commercial market at low cost may be chosen, but any other preferable adhesives for solidifying the material may optionally be used.

It is possible to obtain mixed and solidified materials by adding powders of finely pulverized stones such as quartz porphyry, granite porphyry, and tourmaline together with an adhesive into powder made out of finely pulverized industrial waste materials and materials prone to environmental pollution, and then adding a suitable amount of water thereto, but it is also possible to use a solution previously prepared by adding a suitable amount of water into the finely pulverized quartz porphyry.

The aforementioned materials are preferably mixed in a rotary mixing machine. Any type of rotary mixing machines available in the market can be used. A mixing ratio by volume can be selected freely in the range of 20% to 80% - that is, the principal raw material such as waste material may have a proportion in the range 20% to 80%, with the remaining materials having a corresponding proportion in the range 80% to 20%.

Since it is desirable to obtain the largest possible quantities of carbonised material out of organic materials after a mixture of raw materials with stone powder is put into a carbonisation heating furnace, at a temperature of the order of 250°C (Celsius) to 350°C, especially at a temperature of 298°C that is the ideal temperature to promote heat decomposition of organic materials, the organic materials are kept carbonising and heating in the heating furnace until self-burning of the organic materials completes by thermal decomposition.

The carbonising and heating time can be different, depending on kinds, shapes, and volume of organic materials, and a term of 2-3 hours is practical, including the time needed for moulding the carbonised material into artificial charcoal after completion of heating.

When gas is generated by the decomposition of organic material in a carbonising and heating furnace, it is preferable to forcedly feed the gas with a blower to a gas combustion chamber. Thereafter, the materials left after the gas has been eliminated by the heat-decomposition of the organic material will become carbonised material.

In the moulding process, in the case that the fine powders of the organic materials and the quartz porphyry or the like are blended with an adhesive prior to carbonising and heating, and then are carbonised and heated, the artificial charcoal is produced by adding a suitable amount of water necessary for moulding and by solidifying the materials mixed with a mixing or moulding machine.

In the case that the fine powders such as the quartz porphyry are not mixed in advance of carbonising and heating, an artificial charcoal is produced by mixing the fine powders of the quartz porphyry or the like generating the far-infrared radiation and/or negative ions with an adhesive such as bentonite or cornstarch, adding water to the mixed materials, and then by moulding the mixed material with a moulding machine.

For a yet better understanding of the invention, and to show how embodiments of the same may be carried into effect, reference will now be made, by way of example, to the accompanying diagrammatic drawings, in which:
Figure 1 is a schematic explanatory view of one example of a method of producing artificial charcoal according to one embodiment of the present invention, showing a dry distillation heating and carbonising device;
Figure 2 is a schematic explanatory view of one example of manufacturing artificial charcoal using the dry distillation heating and carbonising device of Figure 1, showing steps for making the artificial charcoal out of dry waste industrial organic materials; and
Figure 3 is a detailed view of the parts that are shown in Figure 2.

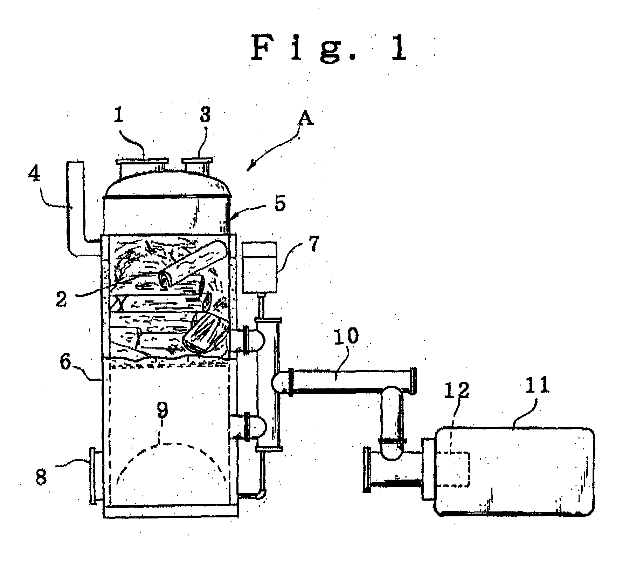

Figure 1 is a schematic explanatory view of a dry heating and carbonising device for producing artificial charcoal on the basis of waste organic material mixed with dry or undried materials.

The dry distillation heating and carbonising device A in the present invention consist of a charging inlet 1 for raw material 2 through which pulverized, combustible, organic materials are charged, a pressure relief valve 3, a boiling can 4, and a dry distillation carbonising heating furnace 5. The dry distillation heating furnace 5 used in this embodiment of the present invention does not have a very high efficiency of dry distillation because, in the waste materials to be processed, raw materials of various different kinds, shapes and hydrous rates must be under the dry distillation heating process, and thus the furnace has a dry distillation heating performance appropriate to the practical circumstance of the raw materials. Numeral 6 is a water jacket formed in the circumference of the dry distillation heating furnace 5 to additionally control the dry distillation conditions in the dry distillation heating furnace 5. In the water jacket 6, water is filled through a water tank 7, which controllably adjusts the volume of water. The hot water heated in the distillation heating furnace 5 is carried into a drying chamber as described below, and used to dry moulded charcoal.

Numeral 8 is an opening to access carbonised material 9, which is also used as an ignition opening, and 10 is a gas conduit which forcedly leads large volumes of gas, generated by the dry distillation heating in the dry distillation heating furnace 5, to a gas combustion chamber 11, where the introduced gas is used as a fuel for biomass electric power generation, drying, heating and so on. Numeral 12 is a gas combustion burner.

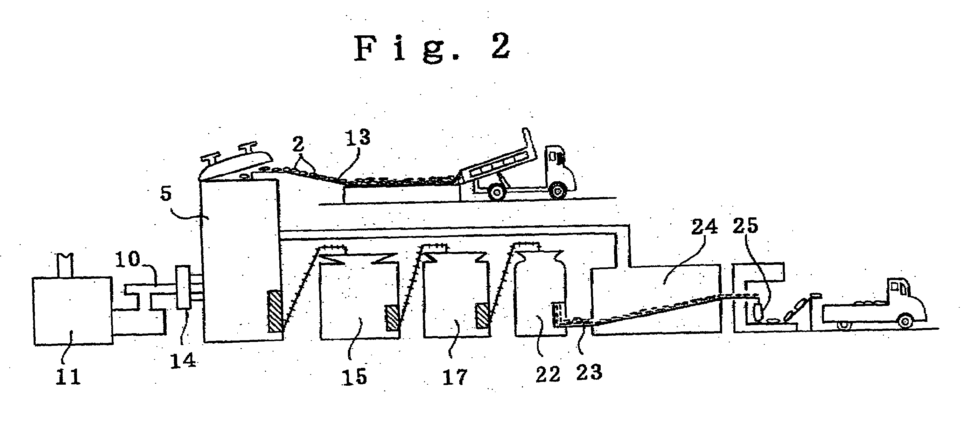

Figure 2 is a schematic explanatory view showing an embodiment of a method of producing artificial charcoal using the dry distillation heating carbonising device A as shown in Figure 1, and shows steps for producing the artificial charcoal on the basis of waste organic material mixed with dry materials.

Numeral 2 shows raw materials of the waste organic material for dry distillation heating process, which are carried into the dry distillation heating furnace 5 by a belt conveyor 13 to produce carbonised material as well as wood gas by heating them in the dry distillation heating furnace 5.

Numeral 14 is a blower for forcedly feeding the wood gas generated in the dry distillation heating furnace 5 into gas combustion chamber 11 through gas conduit pipe 10. The wood gas forcedly fed into the gas combustion chamber 11 is burnt by igniting the gas combustion burner (12). to be utilized as a heat source for biomass electric power generation, boilers, heating systems, greenhouses or the like. "Greenhouses" in this specification includes both those with conventional glazing of glass and those constructed of transparent or translucent materials of plastics (e.g. vinyl).

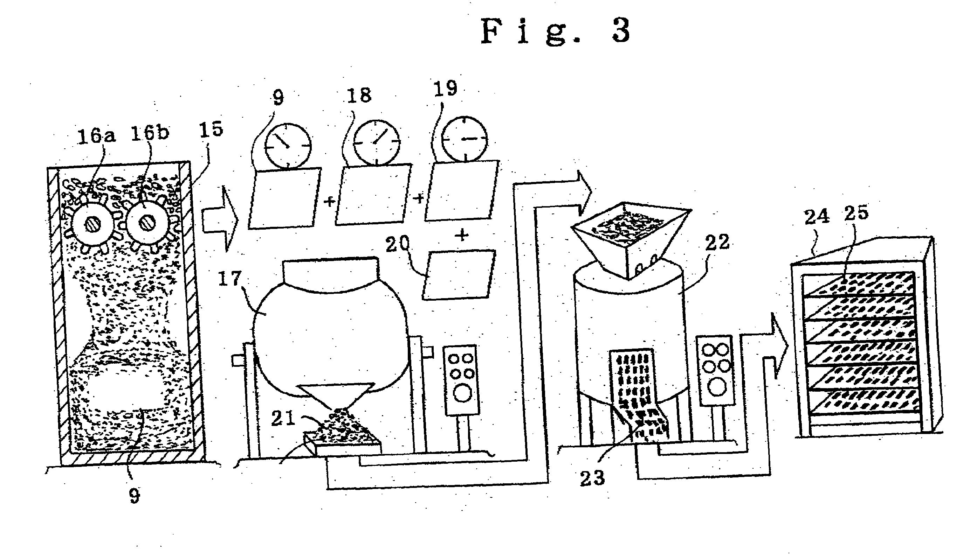

Numeral 15 is a hopper for receiving the carbonised material 9 taken out of removal opening 8 of the dry distillation heating furnace 5, and as shown in more detail in Figure 3, is provided in its inner upper part with a pair of pulverizing rollers 16a, 16b for finely pulverizing the carbonised material 9 of larger size, which is pulverized from the large side into the carbonised material 9 with a smaller, fixed particle size, dropping and passing through the space between the pair of rollers 16a, 16b, and thus stacking at the bottom of the hopper 15.

Numeral 17 is a blending mixer, which produces a mixed carbonised material 21 by mixing the pulverized carbonised material 9 in the hopper 15, an adhesive 18 such as bentonite or cornstarch, a fine powder 19 of quartz porphyry generating far-infrared radiation and/or negative ions, and a suitable amount of water 20.

Numeral 22 shows a moulding machine, which moulds charcoals 23 into desired shapes from the mixed carbonised material 21 mixed in the mixer 17.

The moulded charcoals 23 processed by the moulding machine 22 are housed in a drying chamber 23 to be dried by heat generated by hot water fed through piping 24 from the water jacket 6 of the dry distillation heating furnace 5, thus obtaining artificial charcoals 25 as items on a commercial basis.

In the mixing process at the mixer 17, it is also possible to use a solution that is previously prepared by adding water to the adhesive 18 and the fine powder 19.

Because the powders such as the quartz porphyry, granite porphyry and tourmaline used in embodiments of the present invention are inorganic ores, they are not combustible by themselves. But it is understood that, passing through the processes to be mixed with combustible raw materials and moulding the resultant materials, these powders enter into the very great number of spaces defined between the raw materials. Since the stone powders are super porous minerals pulverized into virtually countless particles, once heating and combustion of the charcoal start, the combustion heat is transmitted to the inside of the porous portions and reacts with the far-infrared radiation to bring about a function of thermal amplification.

At the beginning, when the artificial charcoals arc set on fire, the temperature reaches about 300°C, but the heat is entirely compounded gradually, and rises up to about 1,000°C by thermal amplification.

Moreover, due to the heating of the stone powders, it is confirmed that such a high temperature as mentioned above can be maintained for a long period of many hours, and that during the time of the heating combustion, the generation of far-infrared radiation and/or negative ions will increase.

The embodiment of the method of producing the artificial charcoal according to the illustrated embodiment of the invention will now be described in more detail with reference to Figure 2 and Figure 3.

Waste materials such as lumber from thinning, sawn wood waste bark, branch leaves, adhesive-laminated lumber, plywood, and particleboard having different sizes, shapes, and percentage of water content in the wood material are cut and pulverized to a desired size to prepare raw materials 2, and are charged into the dry distillation heating furnace 5 of the dry distillation heating carbonising device A as shown in Figure 2, and the wood material is heated at a temperature in a range from 250°C to 350°C. The most preferable decomposition temperature is at around 298°C, and wood materials are decomposed intensely under this temperature condition, thus leading to heating and combustion under dry distillation conditions with only the decomposition heating from the wood materials themselves, thereby to produce carbonised material.

The wood gas generated from this dry distillation heating is forcedly stored in the gas combustion chamber 11 as shown in Figure 2, and the resulting gas can be used as fuel for a small-scaled electric power generation system like a private electric generator, for a boiler, a greenhouse, or a dry distillation chamber for moulded charcoals. In addition thereto, in this embodiment, the gas is used as a fuel for a greenhouse and a drying room.

The carbonised material generated by the dry distillation heating is made into artificial charcoal on a commercial basis with the manufacturing method as shown in Figure 2.

The carbonised materials are taken out from the dry distillation heating furnace 5, and are pulverized to a fixed size with the pulverizing rolls 16a, 16b positioned at the upper portion of the hopper 15, thus resulting in stacking of carbonised material at the lower portion of the hopper 15. Then, for 100% of the resulted carbonised material, other materials with a ratio of 3% of adhesive (cornstarch), 15% of quartz porphyry powder as a main material, and 10% of water are mixed in the blending mixer 17 to produce the mixed carbonised material. Next, the mixed carbonised material is moved to the moulding machine 22, where the carbonised material is moulded to produce the moulded carbonised materials in column shape with the diameter of 12mm. Then, immediately, the resulted moulded carbonised materials are moved to the drying chamber 24, where they are rapidly dried at a high temperature from around 80°C to 90°C. The completed artificial charcoals 25, after drying, become a type of hard fabricated charcoal for electric power generation with a diameter of 10mm. During the combustion thereof, they can maintain three times of combustion period of conventional coal. Furthermore, relative to the combustion energy, they exhibit stable combustion where the far-infrared radiation of the quartz porphyry powder of the artificial charcoal generates radiation heat, and as a result, a secondary radiation occurs, thereby generating high temperatures in the range from around 900°C-1200°C.

It is found that the artificial charcoal produced by moulding according to preferred embodiments of the present invention is high in calories, generates negative ions at about 500 to 2000 pieces per cc, thus having not only a heating effect but also a great role in environmental purification of combustion.

Moreover, the artificial charcoal is highly regarded as a safe fuel because it generates extremely little waste gas that causes environmental pollution such as CO² and dioxin, which is less than 1/10 of the standard.

Thus, in preferred embodiments of the present invention, artificial charcoal is made out of mixed carbonised material, wherein the mixed carbonised material is made by carbonising and heating mixed materials which are made by adding a powder of finely pulverized stone such as quartz porphyry, granite porphyry and tourmaline, or a mixed powder of materials optionally selected from these powdered stones, and further, depending on requirements, an adhesive such as bentonite or cornstarch into the finely pulverized powers of various combustible industrial wastes as mentioned above, thus mixing up these materials, and thereafter moulding and solidifying the mixed materials into desired shapes and sizes. Accordingly, when the artificial charcoal is used, since the pulverized material of the contained raw materials acts as a pilot light, it take an extremely short time to start ignition combustion. Furthermore, during the heating combustion, it generates large quantities of far-infrared radiation and/or negative ions, thus to bring about a heating effect as well as an effect useful to human health.

Even in the case of organic materials that are irregular in shape and difficult to be pulverized, such as branch wood, wood bark, logs, pillar timber, composite timber, plywood and particleboard, carbonised material can be produced by carbonising and heating the materials in their irregular shapes, whereafter the carbonised material is finely pulverized, to this is added finely pulverized powder such as quartz porphyry, granite porphyry, and tourmaline, together with adhesive as required, the components are mixed up, and the mixture is then solidified in the manner of a moulding process to produce the artificial charcoal.

Moreover, according to preferred embodiments of the present invention, there are other effects with high reutilization efficiency, wherein combustible gas generated from the dry distillation heating furnace when the carbonised material is made by burning organic materials can be used as a fuels for biomass electric power generation, heating system, greenhouse, etc., by introducing the gas into a gas combustion chamber, and over 90% of the residue of the burnt organic materials are transformed into the carbonised material, which, in turn, is re-made into artificial charcoal to use as fuels.

In this specification, the verb "comprise" has its normal dictionary meaning, to denote non-exclusive inclusion. That is, use of the word "comprise" (or any of its derivatives) to include one feature or more, does not exclude the possibility of also including further features.

The reader's attention is directed to all and any priority documents identified in connection with this application and to all and any papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of producing an artificial charcoal, the method comprising the steps of:
mixing a powder of pulverized, combustible, waste material with a powder of at least one pulverized stone that generates far-infrared radiation and/or negative ions;
moulding and solidifying the mixed powders; and
subjecting the moulded material to a dry distillation process, thereby to produce the artificial charcoal.

2. A method according to claim 1, including a preliminary step of pulverizing small pieces of said waste material to obtain said powder thereof.

3. An artificial charcoal comprising a mixture of a powder of pulverized, combustible, waste material and a powder of at least one pulverized stone that generates far-infrared radiation and/or negative ions, which mixture has been subjected to a dry distillation process.

4. A method or an artificial charcoal according to claim 1, 2 or 3, wherein said pulverised stone is more finely pulverised than said waste material.

5. A method of producing an artificial charcoal, the method comprising the steps of:
subjecting combustible waste material to a dry distillation process, thereby to produce a carbonised material;
mixing said carbonised material with at least one pulverized stone that generates far-infrared radiation and/or negative ions; and
solidifying the mixed material by a moulding process.

6. A method or an artificial charcoal according to any of the preceding claims, wherein said at least one stone comprises one of or a mixture of two or all of quartz porphyry, granite porphyry and tourmaline.

7. A method of producing an artificial charcoal, said method including the steps of:
burning an organic material in a dry distillation heating furnace to generate combustible gas and to leave a residue comprising at least 90% carbonised material, by controlling and adjusting a dry distillation carbonisation temperature in the furnace; and
introducing said combustible gas into a gas combustion chamber, for use as a fuel.

8. A method according to claim 7, including the step of utilising said gas as a fuel for biomass electric power generation and/or heating and/or greenhouses.

9. A method or an artificial charcoal according to any of the preceding claims, wherein said waste material or said organic material comprises industrial waste organic material and/or material prone to cause environmental pollution when burnt.

10. A method or an artificial charcoal according to any of the preceding claims, wherein said waste material or said organic material comprises wood and/or foodstuff waste and/or plant fibre.

11. A method or an artificial charcoal according to any of the preceding claims, wherein an adhesive is included to bind the constituents of the artificial charcoal together.
